# EUROPEAN PATENT SPECIFICATION

(11) **EP 0 589 532 B1**
(45) Date of publication and mention of the grant of the patent: **10.07.1996**
(21) Application number: 93202732.9
(22) Date of filing: 22.09.1993
(51) Int. Cl.: A01K 1/00, F24F 11/00

(54) **Ventilation system**
Lüftungseinrichtung
Système de ventilation

(30) Priority: 23.09.1992 NL 9201645
(43) Date of publication of application: 30.03.1994
(73) Proprietor: KEMPENSERVICE ELEKTROTECHNIEK B.V., NL-5527 AJ Hapert (NL)
(72) Inventor: Smulders, Adrianus Henrikus Josephus, NL-5531 EN Bladel (NL)
(74) Representative: Timmermans, Anthonius C.Th., Ir.

(56) References cited:
- EP-A- 0 026 359
- EP-A- 0 067 979
- EP-A- 0 312 478
- DE-C- 3 521 700
- FR-A- 2 329 196
- NL-A- 8 602 582
- US-A- 4 609 346

## Description

The current invention pertains to a ventilation system comprising a control motor (11), controllable air-transmission means (10) which are mechanically coupled to the control motor and are mounted in the ceiling of a room, which is to be ventilated, and a calculation device (14) coupled to a sensor and the control motor, within which calculation device, on the basis of a signal from the sensor characteristic for the condition in the room, a motor control signal for the adjustment of the air transmission by the adjustable air transmission means is calculated.

A climate control system is known from NL-A-8602582, wherein the ceiling of a room which is to be ventilated is equipped with a number of relatively small air-transmission openings whose transmission capacity is controlled with the help of microprocessor means. Temperature sensors erected in the room, which temperature sensors are connected to the microprocessor, provide the signals which are used as a basis for controlling the transmission capacity of the air-transmission means in question.

The disadvantage of the known ventilation system is that, although the degree of refreshing of the air in the room in question which is to be ventilated is certainly adequate, on the other hand, this leads to undesired draught currents close to the floor at a level where the animals are situated.

Because of the fact that in particular in today's intensive livestock farming, the livestock, such as for example the pigs, are extremely sensitive to draught, and this leads to a considerable spoilage and sensitivity to sickness in the animals, which leads to all kinds of extra costs, it is desirable to protect the relatively intensively bred and therefore extremely sensitive animals from this. The known ventilation or climate control systems for livestock sheds do not address this issue in an adequate manner.

The aim of the current invention is to provide a ventilation system wherein, independently of the volume of air which is directed per unit of time through the room which is to be ventilated, no draught occurs at the level where the animals are situated.

To this end, the ventilation system according to the invention is characterized in that the air transmission means are adjusted on the basis of the air speed measured by the sensor implemented as an air speed sensor, which sensor is located in a tubular shaped housing emanating from both sides of the ceiling.

At this place it is mentioned that from the European patent application EP-A-0312478 the use of an air speed sensor in a ventilation system is known. This known sensor is used at the air inlet to the control the temperature in the ventilated room. In this ventilation system no measures are taken to overcome the disadvantage of draught.

The advantage of the ventilation system according to the invention, which enjoys special application in a livestock shed, is just as simple as it is multi-faceted in its intention. The starting point for the system is that, the speed of the air in the housing as measured with the sensor(s), which speed is determined by the pressure difference across the ceiling, which pressure difference is usually realised in a livestock shed by air pressure means intended to realise a pressure excess above the ceiling and/or air sucking means aimed at realising a pressure shortage in the room which is to be ventilated, is used as an input measure for the calculation unit so as to influence the total effective cross-sectional area of the air transmission means.

The relationship on whose basis the calculation takes place is determined, in particular in a livestock shed, by the desire to create, in particular in the lower half of the livestock shed, a uniform air speed distribution out of the air transmission means from the ceiling downwards. In this manner, all animals continuously receive sufficient fresh air, a situation which is of life-saving importance to them. In that case, a volume of air which is desired to be displaced descends in an evenly distributed manner from the air transmission means, to which end the air transmission means are, as it were, somewhat pinched off. Local significant differences in air speed in the room which is to be ventilated, to which differences the animals are extremely sensitive, and which differences, if they persist, lead to a raised susceptibility to sickness, are avoided in this manner. The point in time when the uniform vertically directed air speed distribution is realised can be easily determined in the calculation device under the control of software, because a further reduction in the effective cross-sectional area of the air transmission means at a given measured sensor air speed leads to a corresponding increase in the pressure across the ceiling and therefore to an increase in speed. Given the then narrower bundle currents of descending air coming from the air transmission means, it is true that the higher air speeds in the narrower bundles displace the desired volume of air as dictated by the air-pressure/sucking means, however, the narrower bundles then penetrate deeper from the ceiling down into the room which is to be ventilated and could be experienced as a draught.

By ensuring that immediately after establishing the afore-mentioned corresponding pressure increase the reduction of the effective cross-sectional area of the air transmission means ceases, a situation is reached where, in principle, for each and every desired amount of air to be displaced in the room which is to be ventilated, the penetration of the separate bundles of descending air is minimal, so that an absolute minimal sensation of draught at the bottom of the room which is to be ventilated, that is to say at animal-level, is guaranteed.

Moreover, it is of advantage that the amount of air which passes the sensor in question is a measure for the total amount of air which has emanated from the air transmission means and is uniformly descending upon the animals. The measurement of this quantity occurs in an extremely accurate manner, and can be accurately adjusted, without the need for overdosing, to the required needs, while also avoiding draught. A further advantage of the ventilation system according to the invention is that it can operate totally independently, and that, in principle, no connection to an external computer is required to allow the ventilation system to perform well. Furthermore, the system can also be built in to an existing ceiling of a livestock shed, which ceiling may or may not be already lowered. The existing ventilation means which may be present in such a situation do not have to be replaced or modified.

In general, in an embodiment of the ventilation system, the calculation device will be adjusted in such a manner that a regulator will guarantee a desired constant amount of air through the air transmission means per unit time.

With that, a uniformly distributed draught-free, but nevertheless sufficient supply of air to the animals is then secured.

In a further embodiment, the tubular housing has such a height and internal diameter, that vortex currents in the housing, which vortex currents are due namely to the extreme which emanates above the ceiling at the location of the sensor, which sensor is placed centrally in the housing, are avoided.

Of advantage is that, with this, a purely laminatory current is caused at the location of the sensor in the housing, which laminatory current provides a trustworthy measure in the entire region, but in particular in the lower regions, of the air transmission means. The flow through the sensor housing is then incidentally a trustworthy measure for the pressure difference across the ceiling and, with this, for the displaced volume of air through the air transmission means in the ceiling.

It has been empirically determined that the quotient of the height and the internal diameter of the housing should lie in the range 4 to 7, and, in particular, should lie between 5.2 and 6. An optimal and reliable value over the entire transmission range of the air transmission means amounts to 5.6.

A further embodiment is a livestock shed equipped with the aforementioned ventilation system, whereby the livestock shed contains air sucking means between the room which is to be ventilated and the open air, for the intention of generating a pressure shortage in the room which is to be ventilated.

Practice has shown that it is of advantage when applying the ventilation system in a livestock shed to realise a pressure difference across the ceiling in a manner in which the air sucking means emanate in the livestock shed. In that case, the ventilation system automatically compensates for leakages in the room which is to be ventilated and for the false air current which results from the opening of a door in the room in question, this being due to the fact that the ventilation system attempts to keep the volume of air transported through the air transmission means constant.

If the capacity of the air-sucking/air-pressing means already located in the livestock shed is adjustable, and, for example, can be influenced by a regulator equipped in general with a microprocessor, with the assistance of, for example, temperature sensors which are connected to the regulator and are to be placed inside and/or outside the room which is to be ventilated, then the capacity of the aforementioned means shall be adjusted to both the measured and the desired temperature in the livestock shed, in addition to being adjusted to the occupancy, weight and weight transition of the animals with respect to time. With this, the ventilation system according to the invention allows itself to be combined with advantage as a complete climate control system for, in particular, a livestock shed, and the ventilation system guarantees a draught-free, comfortable and nevertheless sufficiently ventilated environment, without regard to, for example, the occupancy, the weather, the wind force, the wind direction, etc.

In a further embodiment of the livestock shed according to the invention, the air sucking means emanate in the livestock shed at a distance of between 20 and 50 cm under the ceiling of the room which is to be ventilated.

In that case, practice has shown that air currents emanating from the air transmission means in the form of separate currents at the level of the emanation of the air transmission means in the room which is to be ventilated are quick to flow together and flow through the room as a single diffuse entity.

The invention shall now be further elucidated on the basis of the accompanying drawing, whereby one and the same components are indicated with corresponding reference numbers. The subjects of the figures are as follows:
Figure 1 is a rendition of the embodiment of the ventilation system according to the invention; and
Figure 2 is a schematic depiction of an embodiment of the livestock shed according to the invention.

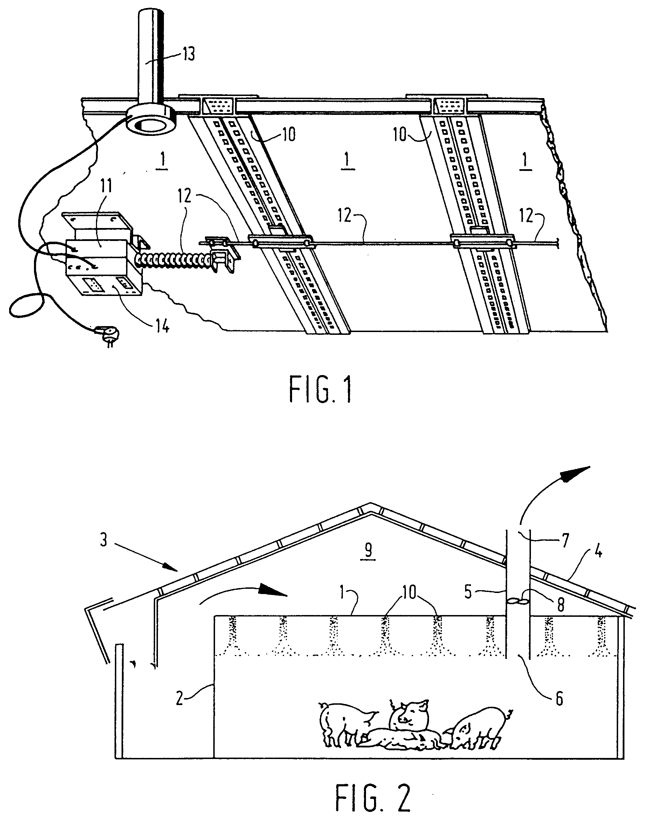

Figure 1 shows, in particular, the existing ceiling of a room which is to be ventilated, which ceiling is composed of separate ceiling portions 1. This room, which is indicated in figure 2 with the reference number 2, is located within the shell of a livestock shed 3. In the depicted embodiment of figure 2, a pipe 5 is extended through the roof 4 of the livestock shed 3, which pipe 5 emanates, at its innermost extreme 6, in general at a distance of between 20 and 50 cm under the ceiling 1. The other extreme 7 of the pipe 5 extends through the roof 4. In general, air sucking means 8 embodied as a controllable ventilator are located within the pipe 5, with which air sucking means 8 a pressure shortage in the room 2 is created. The room 9 within the livestock shed 3, but nevertheless outside the room 2, is, in this case, openly connected to the open air; if desired, a further non-depicted ventilator can be included in the connection with the open air in order to create a pressure excess in the room 9.

As figure 1 depicts, the separate ceiling portions 1 are separated from each other by adjustable air transmission means 10, which air transmission means 10 are implemented in the depicted embodiment as a collection of plates composed of holes with an adjustable cross-sectional area. The transmission means 10 in question which are placed in strips at a distance from each other are inter-connected and mechanically fixed to a control motor 11. In the depicted embodiment, the adjustable air transmission means 10 are implemented in such a manner that, upon horizontal movement of a rod mechanism 12 in the drawing of figure 1, adjustment of the distinct ceiling strips occurs in a direction perpendicular thereto.

Depicted is a tubular shaped housing 13, which housing 13 extends through the ceiling 1 and emanates on one side in the room 1 and emanates on the other side in the room 9. The housing 13 contains a non-depicted sensor which is known in principle, with which sensor it is possible to measure the speed of the air flowing through the housing 13. The housing 13 has a height and diameter such that it is extremely well suited to making it possible for the sensor to measure namely low air speeds in a manner which is suitably accurate and reproducible. This is of particular importance in the livestock shed within which the animals are situated, because with a generally low air speed in the room 2, there is a chance that, as a result of a non-uniform distribution of the descending air emanating from the air transmission means 10, certain pigsties will not be correctly aerated, which leads to a situation where all the pigs present therein will be dead within about half an hour. The sensor mounted in the housing 13 is connected, together with the control motor 11, to a calculation device 14, which calculation device 14 ensures that, in the entire transmission range of the means 10, a uniform descending air current is always descending in the room 2, whereby the danger that certain pigs will die of suffocation is avoided. Before, attempts were made to allow sufficient fresh air to run through the room 2 by setting the ventilator 8 somewhat higher, although this led to draught resulting from the oversized capacity, which draught, as has been explained earlier, is extremely disadvantageous to the animals. At the location of the extreme 6 in the room 2, the relatively narrow bundles of descending air above that point can be individually indicated, although around the level of the extreme 6 in the room 2, these individual bundles become more diffuse, and specific draught currents are adequately prevented by extremely simple means.

## Claims

1. A ventilation system comprising a control motor (11), controllable air-transmission means (10) which are mechanically coupled to the control motor (11) and are mounted in the ceiling (1) of a room (2), which is to be ventilated, and a calculation device (14) coupled to a sensor and the control motor (11), within which calculation device (14), on the basis of a signal from the sensor characteristic for the condition in the room (2), a motor control signal for the adjustment of the air transmission by the adjustable air transmission means (10) is calculated, characterized in that the air transmission means (10) are adjusted on the basis of the air speed measured by the sensor implemented as an air speed sensor which sensor is located in a tubular shaped housing (13) emanating from both sides of the ceiling (1).

2. Ventilation system according to claim 1, whereby the calculation device (14) is embodied in such a manner that a regulator will guarantee a constant amount of air through the air transmission means (10) per unit of time.

3. Ventilation system according to claim 1 or 2, whereby the housing (13) is tubular and has such a height and internal diameter that vortex currents in the housing, which vortex currents are due namely to the extreme which emanates above the ceiling (1) at the location of the sensor, which sensor is placed centrally in the housing (13), are avoided.

4. Ventilation system according to claim 3, whereby the quotient of the height and the internal diameter of the housing (13) lies in the range 4 to 7, and, in particular, lies between 5.2 and 6.

5. Ventilation system according to claim 4, whereby the quotient amounts to 5.6.

6. Livestock shed (3) equipped with a ventilation system according to one of the claims 1-5, where the livestock shed contains air sucking means (8) between the room (2) which is to be ventilated and the open air, for the intention of generating a pressure shortage in the room (2) which is to be ventilated.

7. Livestock shed (3) according to claim 6, whereby the air sucking means (10) in the livestock shed emanate at a distance of between 20 and 50 cm under the ceiling (1) of the room which is to be ventilated.

## Patentansprüche

1. Belüftungsanlage, bestehend aus einem Steuermotor (11), regelbaren Luftdurchlassen (10), die mechanisch mit dem Steuermotor (11) verbunden sind und in der Decke (1) des zu belüftenden Raums (2) angeordnet sind, und aus einer Recheneinheit (14) die mit einem Sensor und mit dem Steuermotor (11) verbunden ist, in welcher Recheneinheit auf der Grundlage eines für den Zustand des Raums (2) charakteristischen Sensorsignals ein Steuersignal für den Motor errechnet wird, um über die regelbaren Luftdurchlässe (10) den Luftstrom anzupassen, dadurch gekennzeichnet, daß die Luftdurchlässe auf der Grundlage der von dem für die Messung der Luftgeschwindigkeit geeigneten Sensor gemessenen Luftgeschwindigkeit geregelt werden, welcher Sensor in einem rohrförmigen Gehäuse (13) angeordnet ist, das über und unter der Decke (1) herausragt.

2. Belüftungsanlage nach Anspruch 1, wobei die Recheneinheit (14) in der Weise ausgestaltet ist, daß ein Regulator dafür Sorge trägt, daß eine konstante Luftmenge pro Zeiteinheit durch die Luftduchtlässe hindurchgeht.

3. Belüftungsanlage nach Ansprucht 1 oder 2, wobei das Gehäuse (13) rohrförmig ist und eine derartige Länge und Innendurchmesser hat, daß Wirbelströme im Gehäuse vermieden werden, die durch das Ende verursacht werden, das über der Decke (1) in Höhe des Sensors hinausragt, welcher Sensor in der Mitte des Gehäuses angeordnet ist.

4. Belüftungsanlage nach Anspruch 3, wobei der Quotient der Länge und des Innendurchmessers des Gehäuses (13) im Bereich zwischen 4 und 7 und insbesondere zwischen 5,2 und 6 liegt.

5. Belüftungsanlage nach Anspruch 4, wobei der Quotient 5,6 ist.

6. Viehstall (3), versehen mit einer Belüftungsanlage nach einem der Ansprüche 1 bis einschließlicht 5, wobei der Viehstall ein Luftabzugssystem (8), zwischen dem zu belüftenden Raum (2) und der Außenluft, aufweist, um einen Unterdruck in dem zu belüftenden Raum (2) zu erzeugen.

7. Viehstall (3) nach Anspruch 6, wobei das Luftabzugssystem (8) im Viehstall über eine Länge van 20 bis 50 cm an der Unterseite aus der Decke (1) des zu belüftenden Raums hinausragt.

## Revendications

1. Système de ventilation comprenant un moteur de réglage (11), des passages à air réglables (10) accouplés mécaniquement au moteur de réglage (11) et placés dans le plafond (1) d'une pièce à ventiler (2), et une unité de calcul (14) connectée à un capteur et au moteur de réglage (11), dans laquelle unité de calcul (14) un signal de réglage du moteur est calculé en fonction d'un signal de capteur représentatif pour l'état de la pièce (2), afin d'adapter le courant d'air par les passages à air réglables (10), caractérisé en ce que les passages à air sont réglés en fonction de la vitesse de l'air mesurée par le capteur qui est approprié à la mesure de vitesses d'air, lequel capteur est placé dans une boîte tubulaire (13) faisant saillie an-dessus et an-dessons du plafond (1).

2. Système de ventilation selon la revendication 1, l'unité de calcul (14) étant réalisée d'une telle manière qu'un régulateur permet le passage d'une quantité constante d'air par les passages à air par unité de temps.

3. Système de ventilation selon l'une des revendications 1 ou 2, la boîte (13) étant tubulaire et ayant une telle longueur et un tel diamètre interne que des courants tourbillonnaires dans la boîte dus à l'extrémité faisant saillie au-dessus du plafond (1) à la hauteur du capteur sont évités, lequel capteur est placé dans le milieu de la boîte.

4. Système de ventilation selon la revendication 3, le quotient de la longueur et le diamètre interne de la boîte (13) étant compris entre 4 et 7, et, plus particulièrement, étant compris entre 5,2 et 6.

5. Système de ventilation selon la revendication 4, le quotient étant 5,6.

6. Etable (3) munie d'un système de ventilation selon l'une des revendications 1 à 5, l'étable comprenant un système d'aspiration d'air (8) entre la pièce à ventiler (2) et l'air libre, afin de produire une dépression dans la pièce à ventiler (2).

7. Etable (3) selon la revendication 6, le système d'aspiration d'air (8) dans l'étable faisant saillie au côté inférieur du plafond (1) de la pièce à ventiler sur une longueur de 20 à 50 cm.
